## Europäisches Patentamt
## European Patent Office
## Office européen des brevets

(19)

(11) Numéro de publication: **0 014 646**

**A1**

(12)

# DEMANDE DE BREVET EUROPEEN

(21) Numéro de dépôt: 80400160.0

(22) Date de dépôt: 01.02.80

(51) Int. Cl.³: **E 01 C 7/26**
**E 01 C 19/10**

(30) Priorité: 02.02.79 FR 7902710

(43) Date de publication de la demande:
20.08.80 Bulletin 80/17

(84) Etats Contractants Désignés:
AT BE CH DE GB IT LU NL SE

(71) Demandeur: ENTREPRISES ALBERT COCHERY
11 rue de Laborde
F-75008 Paris(FR)

(72) Inventeur: Beranger, Jean
Gauville la Campagne Rue du Neubourg
F-27390 Evreux(FR)

(74) Mandataire: Pinguet, André
CAPRI 28 bis, avenue Mozart
F-75016 Paris(FR)

(54) Procédé de fabrication d'enrobés routiers et enrobés routiers obtenus par ce procédé.

(57) Pour améliorer les propriétés mécaniques des enrobés on incorpore dans un malaxeur au mélange sec et chaud des charges minérales, avant l'introduction du liant hydrocarboné, une quantité, comprise entre 0,3 et 3 %, et de préférence entre 0,5 et 1,2% du poids total de la composition, d'une matière plastique en poudre du type des polyéthylènes, des polypropylènes et de leurs copolymères. Préalablement à l'addition du liant, les charges minérales chaudes et la poudre de matière plastique sont mélangées suffisamment pour obtenir une diffusion homogène de la matière plastique à la surface des composants minéraux. La taille maximum des grains plastiques est de 2,5mm, la quantité de particules inférieures à 0,2 mm ne dépassant pas 10% du poids total du plastique.

EP 0 014 646 A1

0014646

## Procédé pour la fabrication d'un produit entrant dans la catégorie des matériaux enrobés pour revêtements routiers

La présente invention concerne un procédé pour la fabrication d'un produit entrant dans la catégorie des matériaux enrobés pour revêtements routiers et sols industriels, ainsi que les produits obtenus par ce procédé.

On sait que ces matériaux résultent du mélange, en malaxeur, après séchage et chauffage éventuels, d'un ensemble de composants minéraux tels que graviers, sables et filler minéral et d'un liant hydrocarboné, tel que bitume, goudron ou mélange bitume-goudron.

Les enrobés hydrocarbonés ont fait l'objet, depuis ces dernières années, d'études visant à améliorer certaines de leurs propriétés mécaniques dans le but de répondre à des domaines d'utilisations particulièrement sensibles à l'apparition de dégradations telle que l'orniérage, le fluage et la fatigue, notamment pour des traversées d'agglomérations, revêtements d'ouvrages d'art ou voies lourdes, et que les sols industriels qui ont à supporter des charges fixes considérables.

Ces études ont porté tout d'abord sur un meilleur choix des paramètres de formulation, mais celles-ci n'ont pu qu'aboutir à un compromis entre les différentes qualités demandées, certaines étant nettement contradictoires, notamment les résistances au fluage et à l'orniérage vis-à-vis des résistances à la fatigue.

Dans le même temps, une deuxième voie s'est présentée pour appréhender ces problèmes. Elle consistait à utiliser, pour enrober les granulats, des liants hydrocarbonés modifiés par addition de polymères. Quelques-uns d'entre eux ont donné satisfaction, en partie, sans répondre totalement aux espoirs que l'on mettait en eux, peut-être à cause des limites de solubilité des polymères dans les liants classiques. D'autre

2

part, ils posent des sujétions particulières d'emploi et de stockage du liant.

Enfin, une troisième voie peu explorée jusqu'à présent consiste à ajouter à l'enrobé classique des substances organiques non solubles dans les liants habituels.

C'est ainsi que des procédés ont été mis au point, permettant d'améliorer certaines qualités des enrobés par addition de déchets de plastique. Cette adjonction est peu coûteuse, mais l'amélioration des propriétés n'est pas marquante. En particulier, l'incorporation en quantité appréciable de déchets découpés en lanières et assurant ainsi un certain rôle d'armature a été mis au point par le Laboratoire Central des Ponts et Chaussées (LCPC) dans la demande de brevet français n° 74 26293 du 29 juillet 1974.

La présente invention consiste par contre à incorporer dans le malaxeur, au mélange minéral séché et chauffé, avant introduction du liant hydrocarboné, une quantité limitée comprise entre 0,3 et 3% et de préférence entre 0,5 et 1,2%, avantageuse ment 0,8, d'une matière plastique sélectionnée pour ses caractéristiques thermiques et sous forme de poudre de consistance sableuse et de préférence exempte d'impureté, au contraire des déchets et plastiques de récupérations utilisés jusqu'ici. Selon une forme préférentielle, la poudre est constituée de grains dont la taille maximum est 2500 microns et dont le pourcentage d'éléments inférieurs à 200 microns ne dépasse pas 10%. Il semble que, d'une façon surprenante, l'action de la matière plastique qui se fixe à la surface des granulats minéraux avant introduction du liant hydrocarboné modifie les liaisons créées par ce liant entre les granulats et permette d'obtenir une amélioration importante des caractéristiques mécaniques du mélange, en particulier en ce qui concerne les propriétés suivantes :

- maniabilité à la mise en oeuvre,

- moindre susceptibilité thermique,

3

- résistance à l'ornièrage et au fluage aux températures de service les plus élevées,
- résistance à la fatigue.

L'homogénéïté, la pureté, ainsi que la finesse des particules semblent être des facteurs déterminants pour obtenir ces résultats, et obligent à renoncer à l'emploi de déchets. Ceci conduit à un produit plus coûteux, mais plus noble et réservé par conséquent à des applications plus sollicitées comme les routes spéciales pour poids lourds et les sols industriels.

La matière plastique constituant cette poudre a un point de fusion inférieur à 180°C et une température de destruction moléculaire supérieure à 250°C. Parmi les différentes matières plastiques remplissant ces conditions, on peut utiliser particulièrement les polyéthylènes et les polypropylènes isotactiques ainsi que leurs copolymères.

Selon l'invention, la poudre de matière plastique doit impérativement être incorporée dans le malaxeur au mélange minéral sec et chaud et de granulométrie convenable avant l'introduction du liant hydrocarboné. L'ensemble minéral et poudre de matière plastique doit être convenablement malaxé avant introduction du liant pour obtenir une diffusion homogène de la matière plastique à la surface des composants du mélange minéral. Le dosage de la poudre peut se faire soit par système doseur de pulvérulent incorporé à l'installation de production, soit par injection dans le malaxeur d'une quantité constante de poudre en adaptant la quantité de granulats minéraux pour obtenir le dosage désiré.

La mise en oeuvre est en tous points identique à celle des enrobés classiques. D'autres caractéristiques et avantages de l'invention seront mieux compris à l'aide des exemples décrits ci-dessous choisis à titre non limitatifs.

4

Pour mettre en évidence les améliorations obtenues par l'invention, deux séries d'essais ont été réalisés selon les modes opératoires MARSHALL et LCPC-DURIEZ, conformément aux modes opératoires en vigueur au LCPC. Ces essais permettent de comparer à un enrobé témoin des enrobés réalisés conformément à l'invention, contenant une , deux et trois parties en poids de matière plastique en poudre constituée soit de polyéthylène, soit de polypropylène, soit d'un copolymère polyéthylène-polypropylène.

La formule d'enrobé du type "Enrobé 0/14 semi-grenu" a la composition suivante :

| Composants | | | | Proportions | | | |
|---|---|---|---|---|---|---|---|
| Gravillons dioritiques | 10/14 | | | 26 parties en poids | | | |
| " | " | 6/10 | | 20 | " | " | " |
| " | " | 2/6 | | 20 | " | " | " |
| " | " | 0/2 | | 22 | " | " | " |
| Sable de rivière 0/5 | | | | 10 | " | " | " |
| Filler calcaire | | | | 1,5 | " | " | " |
| Bitume 60/70 | | | | 5,3 | " | " | " |
| Poudre de matière plastique | | | | 0 à 3 | " | " | " |

Une première série d'essais a été réalisée selon le processus MARSHALL qui consiste à mouler des éprouvettes cylindriques par compactage dynamique et à les tester en stabilité et en fluage à 60°C.

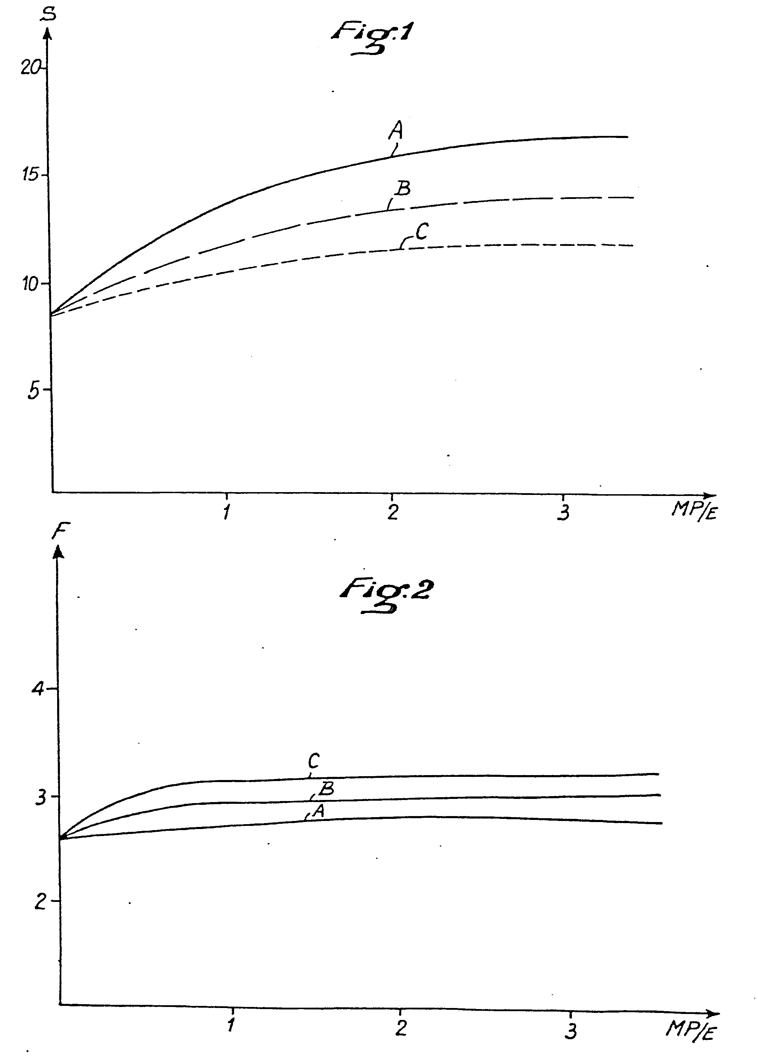

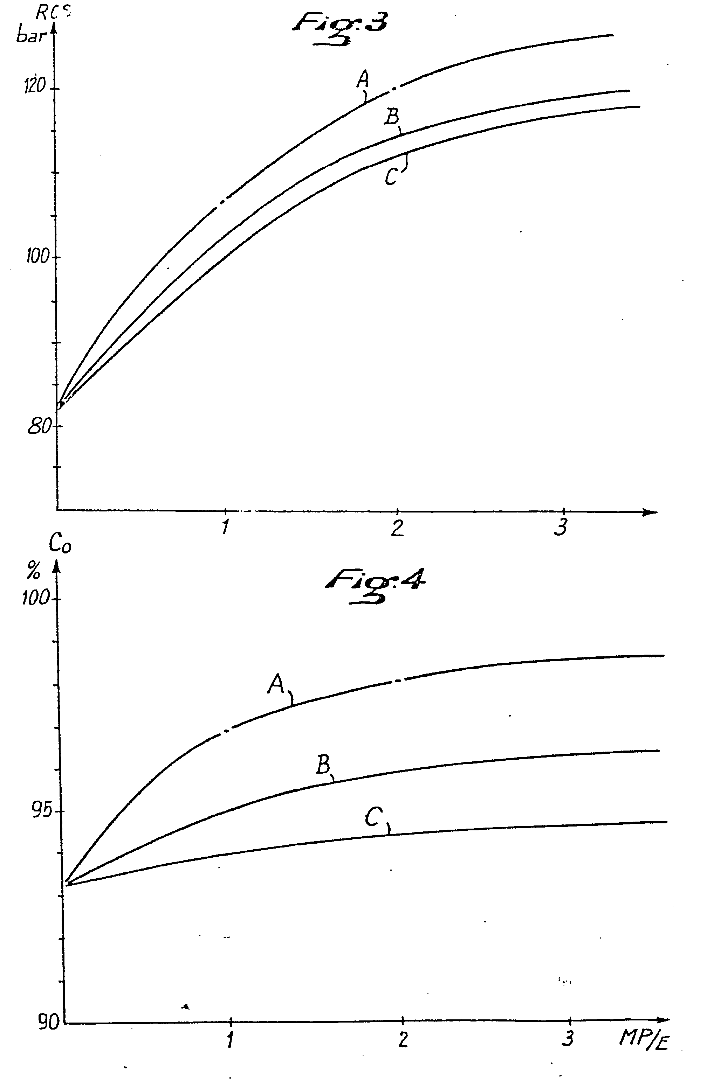

Les figures 1 à 4 représentent des courbes d'essais de mélanges, les courbes marquées A correspondant à une addition de polyéthylène, B, de copolymère polypropylène-polyéthylène, et C, de polypropylène, la figure 1 la stabilité S dans l'essai normalisé MARSHALL du LCPC, la figure 2 le fluage F à 60°C, également pour l'essai MARSHALL, la figure 3 la résistance à la compression simple RCS, et la figure 4 la compacité Co, ces deux derniers essais suivant l'essai normalisé LCPC-DURIEZ, en fonction de la teneur en % en matière plastique dans l'enrobé MP/E.

5

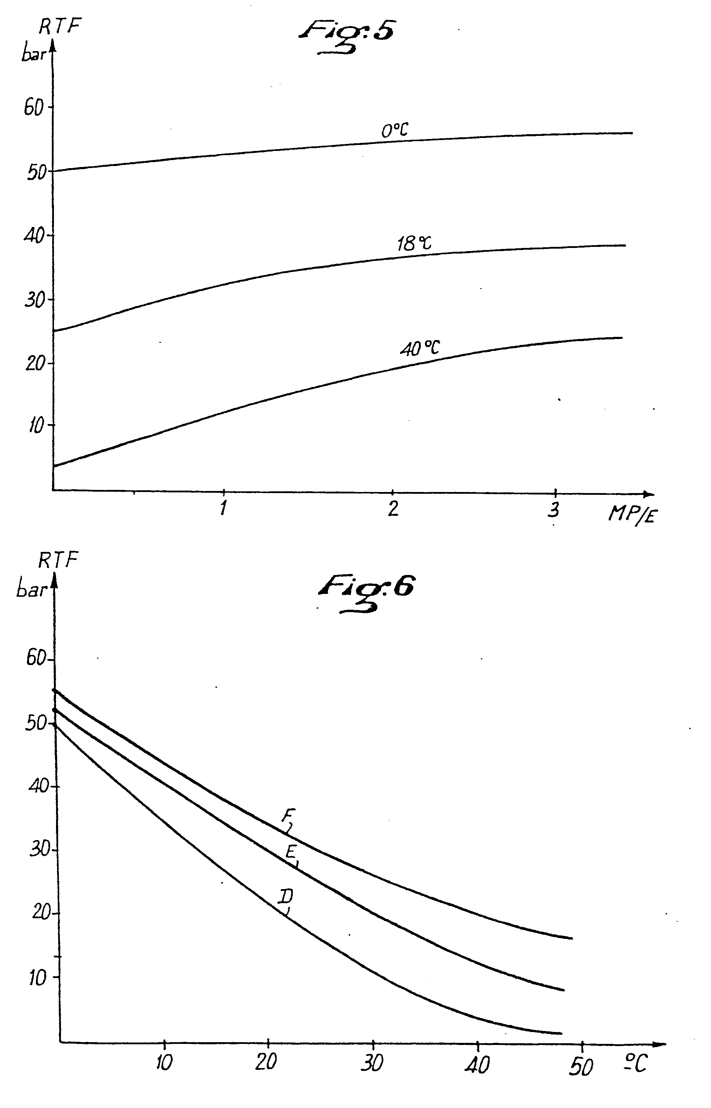

La figure 5 est un graphique représentant la résistance à la traction par fendage d'un enrobé, à 0°C, 18°C et 40°C, en fonction de la charge en % en poids en polyéthylène MP/E, suivant la procédure LCPC-DURIEZ.

La figure 6 est un graphique représentant la résistance à la traction par fendage RTF en fonction de la température en °C d'un enrobé témoin (courbe D), d'un enrobé avec une partie de matière plastique (courbe E) et deux parties (courbe F) suivant la procédure LCPC-DURIEZ.

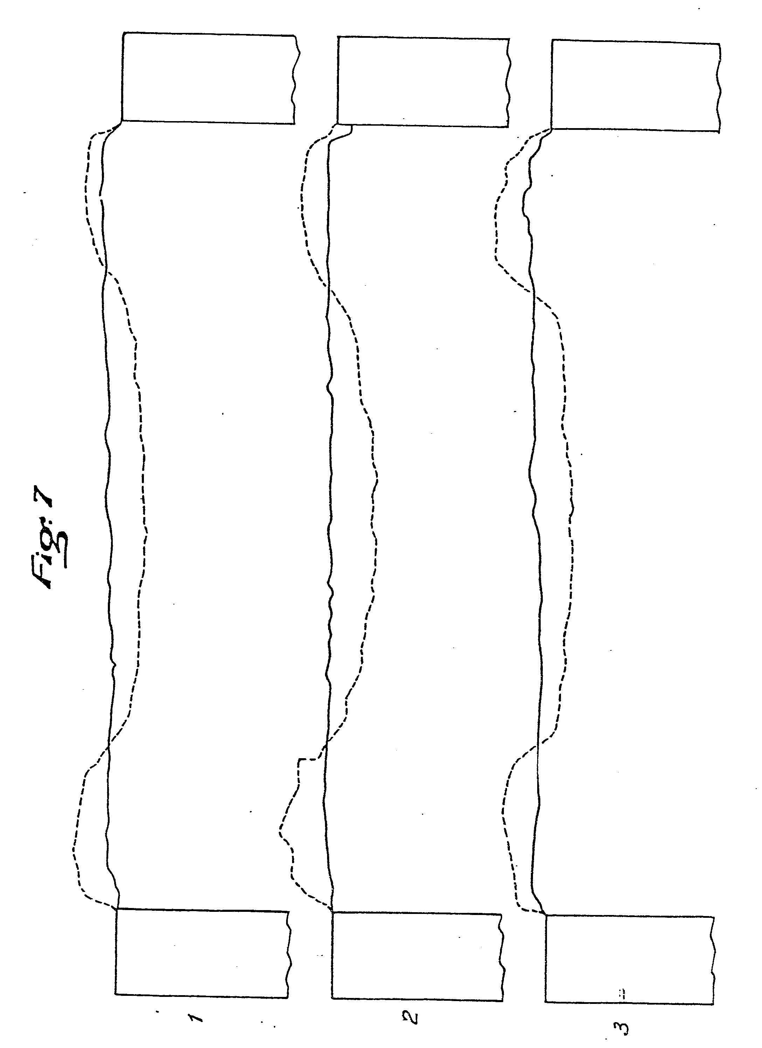

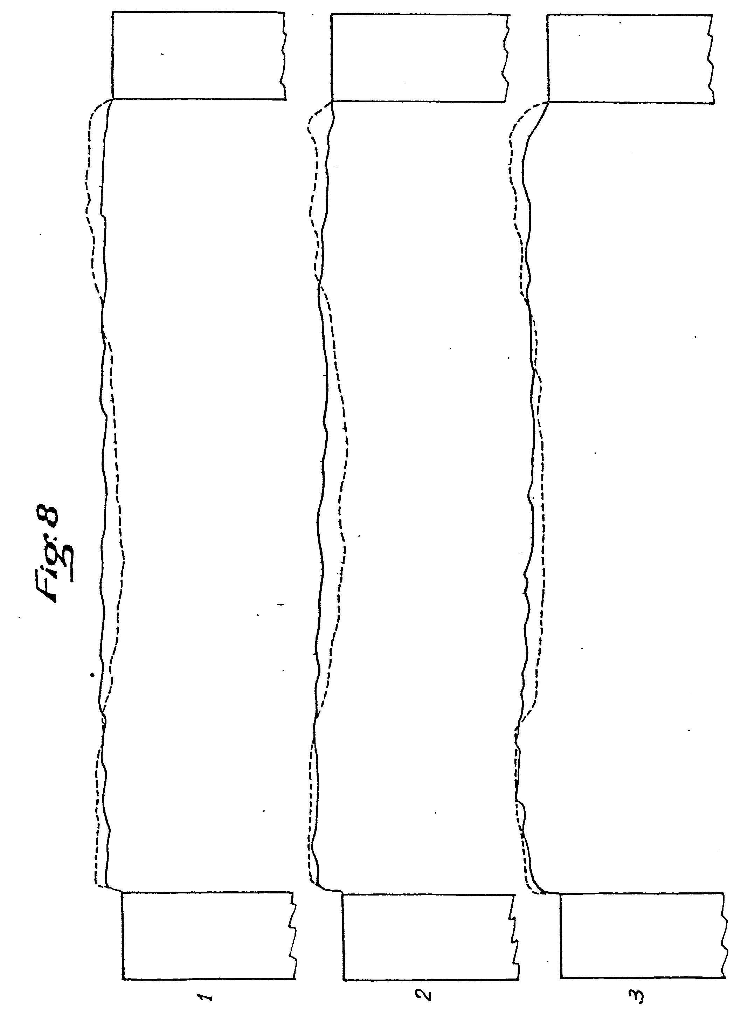

La figure 7 représente en coupe verticale perpendiculaire au sens de roulement, des résultats de mesures d'essais au conformateur (essai à l'orniéreur) de trois profils d'un revêtement en enrobé classique subissant 100.000 cycles, le profil initial étant représenté en trait plein et le profil final en trait interrompu. Enfin, la figure 8 représente le même graphique pour un enrobé selon l'invention.

On note, en se référant à la figure 1, une amélioration sensible de la stabilité S en fonction de la qualité et de la quantité de matière plastique ajoutée MP/E. Ainsi, pour un enrobé contenant une partie de matière plastique, le gain de stabilité par rapport à l'enrobé sans matière plastique (ordonnée à l'origine) dépasse 60% en valeur moyenne. On observe également en rapport avec la figure 2 que la valeur du fluage F à 60°C en fonction de MP/E varie légèrement tout en restant dans des limites acceptables. L'amélioration est en pratique sensible pour une adjonction de 0,3%; elle devient économiquement intéressante pour 0,5%. Au-delà de 1 ou 1,2% d'adjonction, l'amélioration est encore sensible jusqu'à 3%, mais ne sera plus rentable pour toutes les applications.

Une seconde série d'essais a permis de comparer les qualités des enrobés réalisés selon l'invention et de l'enrobé témoin selon le procédé LCPC-DURIEZ. Cet essai consiste à réaliser par compactage statique des éprouvettes cylindriques qui

6

sont testées en compression simple et en traction par fendage à 18°C.

On observe, en se référant à la figure 3, que l'augmentation de la résistance à la compression simple RCS, exprimée en bars, peut atteindre 40% en valeur moyenne pour une addition de deux parties de matière plastique. On remarque également (fig. 4) que la compacité de l'enrobé Co augmente sensiblement en fonction de la quantité de matière plastique ajoutée. On pourra confirmer les conclusions tirées de l'examen des figures 1 et 2 sur le plan économique.

Au vu de ces premiers résultats qui montrent l'intérêt de l'incorporation d'une poudre de matière plastique dans un enrobé conformément à l'invention, une troisième série d'essais a été réalisée pour mettre en évidence l'augmentation des caractéristiques mécaniques en fonction de la température.

Ces essais ont été réalisés selon le processus LCPC-DURIEZ sur un enrobé comportant de 0 à 3 parties en poids de polyéthylène.

On a trouvé (figures 5 et 6) que l'augmentation des caractéristiques mécaniques est d'autant plus forte que la température d'essai est plus élevée. Ainsi, pour une teneur en matière plastique de 2 parties en poids dans l'enrobé, la résistance à la traction par fendage RTF exprimée en bars, à 40°C, est supérieure à 4 fois la valeur obtenue sur l'enrobé sans MP, alors qu'à 0°C, cette augmentation n'est que de 10% en moyenne.

De ce fait, on constate que la susceptibilité thermique de l'enrobé réalisé conformément à l'invention est nettement plus faible que celle de l'enrobé témoin (sans MP, c'est-à-dire valeur de l'ordonnée à l'origine).

Pour mettre en évidence l'amélioration de la compactabilité et de la résistance à la déformation par fluage à température

7

élevée des essais à la presse à cisaillement giratoire et à l'orniéreur ont été réalisés sur l'enrobé témoin et sur l'enrobé confectionné conformément à l'invention en limitant la teneur en matière plastique à 1 partie en poids de polyéthylène.

L'essai à la presse à cisaillement giratoire (PCG) permet d'apprécier la maniabilité et la compactabilité d'un enrobé placé dans les conditions normales de température d'emploi.

Pour l'enrobé témoin et pour l'enrobé réalisé conformément à l'invention avec une partie seulement de matière synthétique, on obtient les valeurs moyennes suivantes de la compacité de l'enrobé en fonction du nombre de girations de l'appareil.

| Nombre de girations de compactage | 1 | 50 | 80 | 100 | 200 |
|---|---|---|---|---|---|
| Enrobé témoin: compacités correspondantes | 79,0 | 92,2 | 93,8 | 94,6 | 96,9 |
| Enrobé contenant une partie de matières synthétiques: compacités correspondantes | 81,7 | 94,4 | 95,9 | 96,7 | 98,9 |

Ces valeurs mettent en évidence un accroissement notable de la compactabilité.

On note également pour l'enrobé contenant une partie de matière synthétique une amélioration sensible de la valeur de la pseudo-contrainte de cisaillement en fonction de la compacité.

| Compacité (%) | 88 | 90 | 92 | 94 | 96 |
|---|---|---|---|---|---|
| Pseudo-contrainte de cisaillement: enrobé-témoin (bar) | 2,11 | 2,26 | 2,33 | 2,33 | 2,27 |
| enrobé contenant 1 partie de matière synthétique | 1,90 | 2,15 | 2,32 | 2,40 | 2,37 |

L'essai à l'orniéreur permet d'apprécier la résistance des enrobés sous l'effet du roulage d'un pneumatique lesté. On

8

note, en fonction du nombre de passages de la roue, la profondeur de l'ornière ainsi que la hauteur du bourrelet qu'elle peut créer dans l'enrobé.

Après 100.000 passages de la roue sur l'enrobé témoin (fig. 7) et sur l'enrobé contenant une partie de matière synthétique (fig. 8), conformément à l'invention, tous deux ayant une compacité voisine de 97%, on obtient en moyenne les résultats suivants :

| | Enrobé témoin | Enrobé selon inv. |
|---|---|---|
| Profondeur de l'ornière (mm) | 7,5 | 3,9 |
| Hauteur du bourrelet (mm) | 5,9 | 2,1 |
| Total (mm) | 13,4 | 6,0 |
| Allure de la courbe | non stabilisée | stabilisée |

Ces résultats montrent que la profondeur totale d'ornière est diminuée de moitié lorsqu'on incorpore, conformément à l'invention, une partie de matière synthétique à l'enrobé.

Les niveaux de performances élevées des produits obtenus avec le procédé conforme à l'invention, sensiblement supérieurs à ceux des enrobés courants de haute qualité, le destinent à des usages très sévères donc, à priori, à des couches de roulement. Il va de soi que, dans ce cas, cela implique l'utilisation de granulats d'excellente qualité et de formule granulométrique convenablement élaborée. Son utilisation est particulièrement indiquée :

   - pour les revêtements d'ouvrage d'art, où l'on souhaite des enrobés possédant à la fois une bonne résistance à la fatigue et à l'orniérage, et une grande imperméabilité et rugosité ;

   - dans le cadre de l'entretien des chaussées en couches minces pour lesquelles on réclame des enrobés à compactage facile qui doivent présenter une bonne résistance à l'orniérage et une bonne qualité anti-dérapante ;

   - pour le rechargement de traverses d'agglomérations lorsqu'il est quasiment impossible d'effectuer une réfection com-

9

plète de l'ensemble de la chaussée ;

- dans le cas de réalisation de voies lourdes neuves ;
- pour les couloirs en agglomérations destinés à la circulation des véhicules de transport en commun ;
- pour les sols industriels.

En plus de ces usages sévères, le procédé est à envisager pour obtenir avec des matériaux de qualité substandard, des performances et caractéristiques physiques compatibles avec les directives et normes administratives, ou pour améliorer les qualités des enrobés de couche de base ou de fondation.

Bien entendu, l'homme de l'art pourra apporter des variantes de réalisation au procédé et aux produits obtenus, objets de l'invention, sans pour cela sortir de son cadre, notamment en substituant par des équivalents techniques les moyens et les produits décrits dans les exemples de réalisation ci-dessus.

Revendications

1. Procédé pour la fabrication d'une composition du type matériau enrobé pour revêtements routiers, caractérisé en ce qu'on incorpore dans un malaxeur à un mélange minéral séché et chauffé, avant introduction d'un liant hydrocarboné une quantité limitée, comprise entre 0,3 et 3% par rapport au poids total de la composition, d'une matière plastique en poudre du type appartenant à la classe constituée par le polyéthylène, le polypropylène et leurs copolymères.

2. Procédé selon la revendication 1, caractérisé en ce que la proportion de matière plastique est comprise entre 0,5 et 1,2% par rapport au poids total de la composition.

3. Procédé selon la revendication 1, caractérisé en ce que la poudre de matière plastique est constituée de grains dont la taille maximum est sensiblement de 2500 microns et dont le pourcentage d'éléments inférieurs à 200 microns ne dépass pas 10% en poids total de poudre.

4. Procédé selon une des revendications 1 à 3, caractérisé en ce que l'ensemble minéral sec et chaud et poudre de matière plastique est suffisamment malaxé préalablement, de façc à répartir la matière plastique sur le mélange minéral, avan introduction du liant hydrocarboné du type goudron, bitume et leurs mélanges.

5. Procédé selon une des revendications 1 à 4, caractérisé en ce que le dosage de la poudre s'effectue à l'aide d'un système doseur de pulvérulent incorporé à l'installation de production.

6. Procédé selon une des revendications 1 à 4, caractérisé en ce que le dosage de la poudre s'effectue par injection dans le malaxeur selon une quantité constante en adaptant la quantité de granulats minéraux pour atteindre le dosage désiré.

7 . Composition du type matériau enrobé pour revêtement
routier obtenu par le procédé selon une des revendications 1 à 5.

0014646

Fig.1

Fig.2

0014646

Fig.3

Fig.4

Fig.5

Fig.6

0014646

Fig. 7

1

2

3

Fig. 8

Office européen
des brevets

**RAPPORT DE RECHERCHE EUROPEENNE**

∩014646

Numéro de la demande

EP 80 40 0160

## DOCUMENTS CONSIDERES COMME PERTINENTS

| Catégorie | Citation du document avec indication, en cas de besoin, des parties pertinentes | Revendica-tion concernee |
|---|---|---|
| X | DE - A - 2 454 803 (HOLLANDSCHE WEGENBOUW ZANEN B.V. OLSTER ASPHALT FABRIEK B.V.)<br><br>* Page 3, lignes 29-34; page 4, lignes 1-14; page 5, lignes 1-7, 22-25, 31-35; page 6, lignes 1-5, 10-12, 20-29; page 7, lignes 1-5, 7,8; page 9, lignes 18-27; page 10, lignes 9-12, 15-18; page 11, lignes 1,2,5-10,15-18, 22-26, 29-32, page 12, lignes 3-6,9-12, 15-22,26-27; page 13, lignes 11-14 *<br><br>-- | 1-4,7 |
| | FR - A - 2 102 089 (THE JAPANESE GEON COMPANY)<br><br>* Page 1, lignes 1-5; page 3, lignes 31-36,40; page 4, lignes 1,6-10; page 5, lignes 22-38 *<br><br>-- | 1,3,4, 7 |
| D | FR - A - 2 280 745 (ETAT FRANCAIS LABORATOIRE CENTRAL DES PONTS ET CHAUSSEES)<br><br>* Page 1, lignes 1-6, 14-16, 24-31; page 2, lignes 10-13; page 4, lignes 23-25; page 5, lignes 32,33; page 6, lignes 22-25; page 8, lignes 7-12 *<br><br>-- | 1,4 |
| | FR - A - 2 086 226 (SKEGA A.B.)<br><br>* Page 1, lignes 1-4, 10-21; page 2, lignes 34-40; page 3, lignes 1-5,40; page 4, lignes 1-13, 32-40; page 5, lignes 1-5, 32-40; page 6, lignes 1-12,16-19 *<br><br>-- ./. | 1,3,4 |

**CLASSEMENT DE LA DEMANDE (Int. Cl. 3)**

E 01 C 7/26
19/10

**DOMAINES TECHNIQUES RECHERCHES (Int. Cl. 3)**

E 01 C

**CATEGORIE DES DOCUMENTS CITES**

X: particulièrement pertinent
A: arrière-plan technologique
O: divulgation non-écrite
P: document intercalaire
T: theorie ou principe à la base de l'invention
E: demande faisant interference
D: document cite dans la demande
L: document cite pour d'autres raisons

&: membre de la même famille, document correspondant

Le present rapport de recherche a ete etabli pour toutes les revendications

| Lieu de la recherche | Date d'achevement de la recherche | Examinateur |
|---|---|---|
| La Haye | 09-05-1980 | SCHUMAN |

**RAPPORT DE RECHERCHE EUROPEENNE**

Office européen
des brevets

| DOCUMENTS CONSIDERES COMME PERTINENTS | | CLASSEMENT DE LA DEMANDE (Int. Cl. ³) |
|---|---|---|
| **Catégorie** Citation du document avec indication, en cas de besoin, des parties pertinentes | **Revendication concernée** | |
| FR - A - 2 129 218 (SOCIETE LANGUE-DOCIENNE DE SOUFRE ET MICRON-COULEUR)<br><br>* Page 1, lignes 1-6, 33-39; page 2, lignes 1-8, 32,33,38-40; page 3, lignes 1-4, 12,13,15, 17,25-33 *<br><br>---- | 1-3 | |
| | | **DOMAINES TECHNIQUES RECHERCHES (Int. Cl. ³)** |